# EUROPÄISCHE PATENTSCHRIFT

(11) **EP 2 944 889 B1**
(45) Veröffentlichungstag und Bekanntmachung des Hinweises auf die Patenterteilung: **12.07.2017**
(21) Anmeldenummer: 15167501.4
(22) Anmeldetag: 13.05.2015
(51) Int. Cl.: F24F 7/08, F24F 12/00, F24F 13/02, F24F 13/20

(54) **KOMPAKTES LÜFTUNGSGERÄT MIT EINZELN ANSTEUERBAREN LUFTFÖRDEREINHEITEN**
COMPACT VENTILATION APPLIANCE WITH INDIVIDUALLY CONTROLLABLE AIR CONVEYOR UNITS
APPAREIL D'AÉRATION COMPACT DOTÉ D'UNITÉS DE REFOULEMENT D'AIR INDIVIDUELLES POUVANT ÊTRE COMMANDÉES

(30) Priorität: 14.05.2014 DE 102014106824
(43) Veröffentlichungstag der Anmeldung: 18.11.2015
(73) Patentinhaber: Fraunhofer-Gesellschaft zur Förderung der angewandten Forschung e.V., 80686 München (DE)
(72) Erfinder: Dinkel, Arnulf, 79100 Freiburg (DE); Coydon, Fabien, 79100 Freiburg (DE)

(56) Entgegenhaltungen:
- EP-A1- 2 479 508
- DE-A1-102012 220 391
- US-A1- 2005 257 550
- US-A1- 2011 237 175

## Beschreibung

Die Anmeldung betrifft ein kompaktes Lüftungsgerät mit einzeln ansteuerbaren Luftfördereinheiten.

### Stand der Technik

Bei wohnungsweisen zentralen Lüftungsanlagen gibt es sowohl bei der Installation wie auch bei der Betriebsführung Probleme. Der Platzbedarf für Lüftungsgeräte wurde in den letzten Jahren reduziert, aber das Volumen für Verteiler und oft notwendige Kanalkreuzungen verursacht vor allem bei Sanierungsmaßnahmen ästhetische Schwierigkeiten. Zentrale Lüftungsgeräte ermöglichen im Regelfall nur durch die Einführung von zusätzlichen Druckverlusten (Ventile) eine individuelle unabhängige Regelung des Luftvolumenstromes in jedem bedienten Raum. Wenn Ventile für individuelle Regelung des Volumenstromes eingebaut sind, werden der gesamte Zuluft Volumenstrom und Abluft-Volumenstrom nur sehr selten ausgeglichen, es kann dann z.B. doppelt soviel Zuluft wie Abluft geben. Aus Kostengründen werden sehr selten gleichzeitig Wärmerückgewinnung und bedarfsgeregelte Volumenströme eingesetzt. Eine Vielzahl von Studien vergleicht die energetische Effizienz von beiden Lösungen aber immer getrennt und nicht miteinander.

Die Klassische Auslegung von zentralen Lüftungsanlagen enthält die Komponenten Lüftungszentrale, Außenluft-Anschluss, Fortluft Anschluss und zwei Luftverteilernetze - also eines für Zuluft und eines für Abluft.

Eine zweite Möglichkeit ist die Lüftungszentrale mit zwei Verteilern zu verbinden, die mehrere Anschlüsse enthalten um die Luft zu den verschiedenen Räumen zu verteilen Bei diesen beiden ersten Lösungen können Rohr-Kreuzungen Probleme darstellen Die Volumenströme in den jeweiligen Räumen werden allenfalls selten einzeln geregelt und die Regelung erfolgt meistens nur zentral am Lüftungsgerät. Die einzige Lösung um die Volumenströme einzeln zu steuern ist der Einsatz von regelbaren Luftklappen. was zu zusätzlichen Druckverlusten führt. Diese Lösung wird etwa von der Firma Maico angeboten.

Die Firma Zehnder bietet ein System an, bei dem die Verteiler direkt an die Lüftungszentrale angeschlossen werden
Die Firma Pluggit schlägt ein System vor, in dem die Verteilung der Zu- und Abluft durch einen Doppel Ring erfolgt, der an der Kante zwischen Wand und Decke im Flur installiert werden kann Anschlüsse sind direkt auf diesem Ring vorgesehen, damit sind fast keine zusätzlichen Zuluft- und Abluft Kanäle nötig. Mit diesem System stellen Kreuzungen keine Probleme dar. Die Volumenströme in den jeweiligen Räumen werden nicht einzeln geregelt und die Regelung kann nur zentral erfolgen
Die Firma Helios schlägt ein System vor, bei dem der Abluft Verteiler direkt im Lüftungsgerät integriert ist. Diese Lösung wurde so entwickelt, weil die typischen Wohnungsgrundrisse so sind, dass die Abluft-Räume oft nebeneinander liegen. Die Zuluft wird in die jeweiligen Räume mit Hilfe eines Rings verteilt, der an der Kante zwischen Wänden und Decke im Flur installiert wird.

Eine Möglichkeit, um die Volumenströme effizienter einzeln regeln zu können, ist der Einsatz von dezentralen Lüftern, also ein Lüfter je Raum, die mit Hilfe eines Kanalnetzes zentral angeschlossen sind. Diese Lösung hat den Nachteil, dass Lüfter in verschiedenen Räumen verteilt sind, was die Installation und die Wartung komplizierter macht. Die Regelung der Volumenströme kann durch zwei verschiedene Komponenten erfolgen.

Das Funktionsprinzip der von Aereco angebotenen feuchtegeführten Wohnungslüftung basiert auf der Regelung des Öffnungsquerschnitts der Zu- und Abluftelemente durch einen im Element eingesetzten Feuchtesensor. Dieses Prinzip wird aber eher für Lüftungsanlagen ohne Wärmerückgewinnung benutzt.

Für zentrale Lüftungsanlagen mit Wärmerückgewinnung könnte die gleiche Art Regulierung durch motorisierte Luftklappen erfolgen In diesem Fall kann die Steuerung auf Feuchtesensoren oder CO₂-Sensoren basiert sein. Diese Lösung wird nach Kenntnis der Anmelderin nur sehr selten benutzt.

Um zu vermeiden, dass die Steuerung eines Volumenstroms einen Einfluss auf die anderen Volumenströme hat, kann der zentrale Lüfter einen konstanten Druck sichern Dieser konstante Druck erfolgt durch Drehzahlregelung.

Diese Lösung führt dazu, dass der Lüfter mit ungefährem konstantem Energieverbrauch läuft, auch wenn der Luftbedarf geringer ist.

Um dieses Problem zu reduzieren, wird von der Firma Belimo vorgeschlagen, dass ein zentrales Regelungssystem mit einem Lüfter und allen Luftklappen kommunizieren kann. Dieses System sichert, dass die Luftklappe, die auf dem höchsten Volumenstrom eingestellt werden soll, immer ganz geöffnet bleiben kann. Die Drehzahl des Lüfters kann diesen Volumenstrom auf das gewünschte Niveau bringen und die anderen Luftklappen passen sich an, so dass alle Volumenströme einzeln auf das gewünschte Niveau gesetzt werden können. Mit dieser Lösung werden die für die Regulierung eingesetzten Druckverluste reduziert, aber nicht ganz vermieden.

Aus der US 2005/0 257 550 A1 ist ein Belüftungssystem gemäß dem Oberbegriff von Anspruch 1 bekannt. Dieses Belüftungssystem umfasst ein Gehäuse, welches eine Abluftpassage aufweist, die Raumluft durchströmen lässt. Ferner ist im Gehäuse ein Versorgungskanal vorhanden, durch den Frischluft strömen kann. Es ist ein Kreuzstrom-Wärmetauscher vorhanden, so dass sich Abluftpassage und Versorgungskanal kreuzen und Wärme austauschen können.

Aus den Patentschriften FR 246 9 664 A, DE 2010 10 006 147A1, EP 2 479 508 A1, EP 2 574 861 A1, DE 20 2013 100 986 U1, EP 2 508 810 A1, EP 2 508 814 A1, DE 10 2010 006 455 A1, WO 10 043 338 A1 und WO 09 106 189 A1, JP 2001-174 025 A und der DE 10 2012 220 391 A1 sind weitere Informationen zu entnehmen.

### Allgemeiner Lösungsweg

Aufgabe der vorliegenden Erfindung ist ein energieeffizientes, praxistaugliches, kompaktes Lüftungsgerät bereitzustellen, welches mit überschaubarem Aufwand hergestellt werden kann.

Zur Lösung dieser Aufgabe wird ein Lüftungsgerät zur Belüftung eines Gebäudes mit den Merkmalen von Anspruch 1 vorgeschlagen. Bevorzugte Ausführungsformen sind in den abhängigen Ansprüchen definiert.

Das Lüftungsgerät ist ausgerüstet mit einem Zuluftverteiler der durch mindestenes einen Versorgungskanal mit Zuluft versorgt werden kann und einen Abluftverteiler aus dem durch mindestens einen Entsorgungskanal Fortluft abgeführt werden kann. Dabei weist der Zuluftverteiler eine Mehrzahl von einzeln ansteuerbaren Luftfördereinheiten auf, welche die Zuluft durch unterschiedliche, der jeweiligen Luftfördereinheit zugeordnete Zuluftkanäle zu einem dem jeweiligen Zuluftkanal zugeordneten Raum fördern können. Durch eine derartige Anordnung kann erreicht werden, dass einzelne Räume individuell belüftetet werden können. Dies wird bisher in der Regel durch Ventile oder andere Einrichtungen erreicht, welche den Durchströmungswiderstand erhöhen, wodurch der Energiebedarf steigt. Die Zusammenfassung von Zuluftverteiler, Abluftverteiler und Luftfördereinheiten in einem Lüftungsgerät führt zu einer kompakten und platzsparenden Anordnung. Ferner ist eine vergleichsweise einfache Bauweise möglich. Soweit bei derartigen Lüftungsgeräten eine Wartung erforderlich ist, sind vor allem die einzelnen Luftfördereinheiten betroffen. Es ist daher günstig, wenn die Luftfördereinheiten kompakt in einem Lüftungsgerät zusammengefasst sind. Auch die Stromleitungen, mit denen Energie zu den Luftfördereinheiten geführt werden kann, sind somit konzentriert an einem Ort. Es ist also keine Verteilung im Gebäude mehr erforderlich.

Alternativ, normalerweise aber zusätzlich, weist der Abluftverteiler ebenfalls eine Mehrzahl von einzeln ansteuerbaren Luftfördereinheiten auf, welche die Abluft durch unterschiedliche, der jeweiligen Luftfördereinheit zugeordnete Abluftkanäle von einem dem jeweiligen Abluftkanal zugeordneten Raum fördern können.

Die oben genannten Vorteile die Zuluft mit einem platzsparenden Gerät individuell ohne unnötig energieverbrauchende Bauteile wie Ventile einzelnen Räumen zuführen zu können, gelten in gleicher Weise auch für die Abfuhr von Abluft.

Hinsichtlich optimaler Lüftung ist es am besten sowohl die Zuluft als auch die Abluft mit einer Luftfördereinheit zu fördern. Es ist aber auch möglich nur die Abluft mit einer Luftfördereinheit aus dem jeweiligen Raum zu fördern und die Zuluft dadurch anzusaugen. Es ist auch denkbar nur die Zuluft mit Luftfördereinheiten zu fördern und die Abluft dadurch aus dem Raum zu drücken.

Es soll klargestellt werden, dass häufig der Zuluftkanal in einen anderen Raum führt als der Abluftkanal. So ist es etwa in Wohngebäuden üblich Zuluftkanäle in Wohnzimmer, Arbeitszimmer und Schlafzimmer zu führen, während die Abluftkanäle aus Küchen und Sanitärräumen führen. Damit kann erreicht werden, dass in den letztgenannten Räumen auftretende Gerüche nicht oder nur eingeschränkt in Wohnzimmer, Arbeitszimmer und Schlafzimmer gelangen.

In einer Ausführungsform der Erfindung ist in dem Lüftungsgerät ein Wärmetauscher, insbesondere ein Rotationswärmetauscher oder ein Plattenwärmetauscher oder ein Enthalpiewärmetauscher, angeordnet, welcher eine Übertragung von Wärme von der Abluft an die Zuluft und/oder umgekehrt ermöglicht. Ein bekannter Vorteil bei Zu- und Abluftanlagen ist die Möglichkeit die in der Abluft enthaltene Wärme teilweise an die Zuluft übertragen zu können. Vollständigkeitshalber sei angeführt, dass etwa bei Kühlungsbedarf auch der umgekehrte Fall, also eine Wärmeabgabe von der Zuluft an die Abluft denkbar ist. Durch die Integration des Wärmetauschers in das Lüftungsgerät ist eine platzsparende kompakte Anordnung möglich. Ein Enthalpiewärmetauscher kann dadurch erreicht werden, dass eine spezielle Membran als Wärmetauscher dient. Die Wassermoleküle der Abluft, also der abgesaugten Raumluft, schlagen sich an den Übertragungsflächen des Wärmetauschers nieder, wandern durch die Membran und werden auf der Zuluftseite von der zunächst trockenen Zuluft, im Regelfall handelt es sich um Außenluft, aufgenommen. Damit wird Trockenheit in Räumen vermieden. Dies ist bei winterlichen Bedingungen oft vorteilhaft. Ferner kann eine Kondensatansammlung auf der Abluftseite im Wärmetauscher vermieden werden.

In einer Ausführungsform der Erfindung sind für die Luftfördereinheiten Gehäuse vorhanden, welche in das Lüftungsgerät eingebaut oder einbaubar sind und/oder an das Lüftungsgerät außen angebaut oder anbaubar, insbesondere ansteckbar, sind. Damit ist eine kompakte und modulare Bauweise möglich. Insbesondere bei der Variante, bei der die Gehäuse außen anbaubar sind, kann in einfacher Weise eine Luftfördereinheit mit dem zugehörigen Zu- oder Abluftkanal angebaut werden. In einer besonders einfachen Variante genügt hierzu einfaches Aufstecken.

Somit kann ein Lüftungsgerät bereitgestellt werden, welches für eine variable Anzahl von Luftfördereinheiten, also für eine variable Anzahl von Zu- und Abluftkanälen, geeignet ist. Dies gestattet eine Produktion in höheren Stückzahlen, wodurch sich Preisvorteile ergeben. Die einzelnen Gehäuse mit den Luftfördereinheiten können ebenfalls in hoher Stückzahl bereitgestellt werden.

Soweit an einem Anschluss für eine Luftfördereinheit keine Luftfördereinheit, beziehungsweise kein Gehäuse für eine Luftfördereinheit, angeschlossen ist, kann dieser Anschluss etwa mit einem Deckel verschlossen werden.

In einer Ausführungsform der Erfindung sind zur Förderung von Zuluft und zur Förderung von Abluft identische Luftfördereinheiten vorhanden , die so ausgebildet sind, dass sie je nach Einbaulage zur Förderung von Zuluft oder zur Förderung von Abluft dienen können. Damit kann das Lüftungsgerät in einfacher Weise an verschiedene Anforderungen angepasst werden. Dies trägt dazu bei, dass hohe Stückzahlen mit den entsprechenden Herstellungsvorteilen erreichbar sind, bei gleichzeitiger Anpassbarkeit an konkrete Bedürfnisse im Einzelfall.

In einer Ausführungsform der Erfindung ist die Luftfördereinheit für die Zuluft in einen Raum und die Luftfördereinheit zur Abluft aus einem Raum so abgestimmt, dass die geförderten Luftmengenströme bei Normaldruck im zu belüftenden Raum weitgehend übereinstimmen. Zunächst ist klarzustellen, dass bei einem tatsächlich geschlossenen Raum sich stets ein Zustand einstellen wird, bei dem die geförderten Luftmengenströme übereinstimmen. Ist etwa die Luftfördereinheit für die Abluft zunächst stärker eingestellt, wird mehr Abluft angeführt als Zuluft zugeführt, bis sich ein entsprechender Unterdruck im zu belüftenden Raum einstellt, so dass Zuluft nicht nur durch die Luftfördereinheit durch den Zuluftkanal gefördert wird, sondern auch durch den Unterdruck. Neben einer unter Umständen niedrigeren Effizienz der Luftfördereinheiten ist dies vor allem deshalb häufig ungünstig, weil der Unterdruck zur Folge hat, dass durch Undichtigkeiten in unerwünschter Weise Luft von außen oder von anderen Räumen in den zu belüftenden Raum dringen kann. Die Betrachtungen für den Unterdruck gelten für den Überdruck in analoger Weise. Aus den vorgenannten Überlegungen ist es vorteilhaft, Luftfördereinheit für die Zuluft in einen Raum und die Luftfördereinheit zur Abluft aus einem Raum so abzustimmen, dass sich bei Normaldruck jeweils derselbe Luftmengenstrom einstellt. Hierzu kann man zwei gleiche Luftfördereinheiten vorsehen, die mit einer gemeinsamen Ansteuerung oder einer gemeinsam angesteuerten elektrischen Leistungsversorgung versehen sind.

Soweit - wie oben geschildert - die Zuluft in andere Räume geführt wird als die Abluft abgesaugt wird, können die Luftmengenbetrachtungen nicht raumweise erfolgen. Vielmehr sind Raumgruppen oder eine Wohnung zu betrachten. Es versteht sich, dass in Räumen, in welche die Zuluft gefördert wird, sich ein etwas höherer Druck einstellt als in Räumen aus denen Abluft abgesaugt wird.

In einer Ausführungsform der Erfindung weisen die beiden Luftfördereinheiten einen gemeinsamen mechanischen Antrieb auf. So kann eine gemeinsame Welle für zwei Ventilatoren vorgesehen werden. Damit drehen sich der jeweilige Ventilator für die Zuluft und die Abluft gleich, so dass gleiche Luftmengenströme gefördert werden. Dies gilt freilich nur, wenn die Durchströmungswiderstände im Zuluftkanal und im Abluftkanal weitgehend identisch sind.

In einer Ausführungsform der Erfindung können die Zuluftkanäle und/oder die Abluftkanäle mit Hilfe eines Stecksystems oder eines Systems nach Art eines Stecksystems an die Lüftungsgerät angesteckt werden. Bereits oben bei der Diskussion von den Gehäusen für die Luftfördereinheiten ist dargelegt worden, dass eine modulare Ausführung vorteilhaft ist. Zu dieser Modularität tragen auch ansteckbare Zu- und Abluftkanäle bei. Freilich muss es sich nicht um ein Stecksystem handeln, es kommen auch ähnliche Systeme in Betracht. Vorteilhaft ist in jedem Fall eine leichte Montierbarkeit.

In einer Ausführungsform der Erfindung sind Sensoren zur Ansteuerung der Luftfördereinrichtungen vorhanden, wobei die Sensoren zur Ansteuerung der Luftfördereinrichtungen für die Abluft insbesondere im Gehäuse der Luftfördereinrichtung für die Abluft angeordnet sind und/oder die Sensoren zur Ansteuerung der Luftfördereinrichtungen für die Zuluft insbesondere im zu belüftenden Raum angeordnet sind. Durch die Sensoren wird die Qualität der Luft überwacht und abhängig davon die Belüftung angesteuert. Da die Abluft beim hier beschriebenen Lüftungsgerät aus einem bestimmten Raum stammt und davon auszugehen ist, dass im Abluftkanal sich die Luftqualität nur geringfügig ändert - eine Temperaturänderung ist freilich immer denkbar - kann die Luftqualität auch in der Abluft gemessen werden. Dies gestattet die Sensoren im Lüftungsgerät zu integrieren. Es versteht sich, dass die Sensoren vor einer Zusammenführung der Abluft aus verschiedenen Räumen angeordnet sein müssen, da anderenfalls die Information über die Luftqualität der einzelnen Räume verloren geht.

In einer Ausführungsform der Erfindung sind die Sensoren zur Ansteuerung der Luftfördereinrichtungen für die Zuluft mit einer Funkverbindung und/oder mit in den Zuluftkanälen verlaufenden Kabeln mit den Luftfördereinrichtungen für die Zuluft verbunden. Damit können die Signale von den Sensoren an die anzusteuernden Fördereinheiten für die Zuluft übertragen werden.

In einer Ausführungsform der Erfindung sind Filter zur Reinigung der geförderten Luft vorhanden. So können vor jeder Luftfördereinheit für Abluft Filter vorhanden sein. Diese können in der jeweiligen Luftfördereinheit integriert sein. Es können aber auch Ausnehmungen im Gehäuse vorhanden sein, in welche die Filter eingesetzt werden können. Zur Filterung der Zuluft kann ein gemeinsamer Filter direkt nach einem Außenlufteintritt in das Lüftungsgerät oder vor dem Außenlufteintritt in den Wärmetauscher angebracht sein.

### Ausführungsbeispiele und vertiefende Betrachtungen

Anhand der Figuren sollen weitere Details der Erfindung dargestellt werden. Dabei zeigen
- Fig. 1: Draufsicht auf ein Lüftungsgerät mit außen anbaubaren Lüftern
- Fig. 2: perspektivische Ansicht eines Lüftungsgeräts mit außen anbaubaren Lüftern
- Fig. 3: Schnittansicht eines Lüftungsgeräts mit außen anbaubaren Lüftern
- Fig. 4: Außen anbaubares Abluft-Lüftergehäuse mit integriertem Filter
- Fig. 5: Schnittansicht eines außen anbaubaren Zuluft-Lüftergehäuses
- Fig. 6: Draufsicht auf ein Lüftungsgerät mit innen angebrachten Lüftern
- Fig. 7: Lüftungsgerät mit innen angebrachten Lüftern im Einsatz in einer Wohnung
- Fig. 8: Schnittansicht eines Lüftungsgeräts mit innen angebrachten Lüftern
- Fig. 9: weitere Schnittansicht eines Lüftungsgeräts mit innen angebrachten Lüftern
- Fig. 10: weitere Schnittansicht eines Lüftungsgeräts mit innen angebrachten Lüftern
- Fig.11: Lüftungsgerät mit innen angebrachten Lüftern - Schnitt durch Außenluft und Zuluftkanäle
- Fig. 12: Lüftungsgerät mit innen angebrachten Lüftern - Schnitt durch Abluft und Fortluftkanäle
- Fig.13: innen angebrachtes Lüftergehäuse in Abluft-Position
- Fig. 14: innen angebrachtes Lüftergehäuse in Zuluft-Position

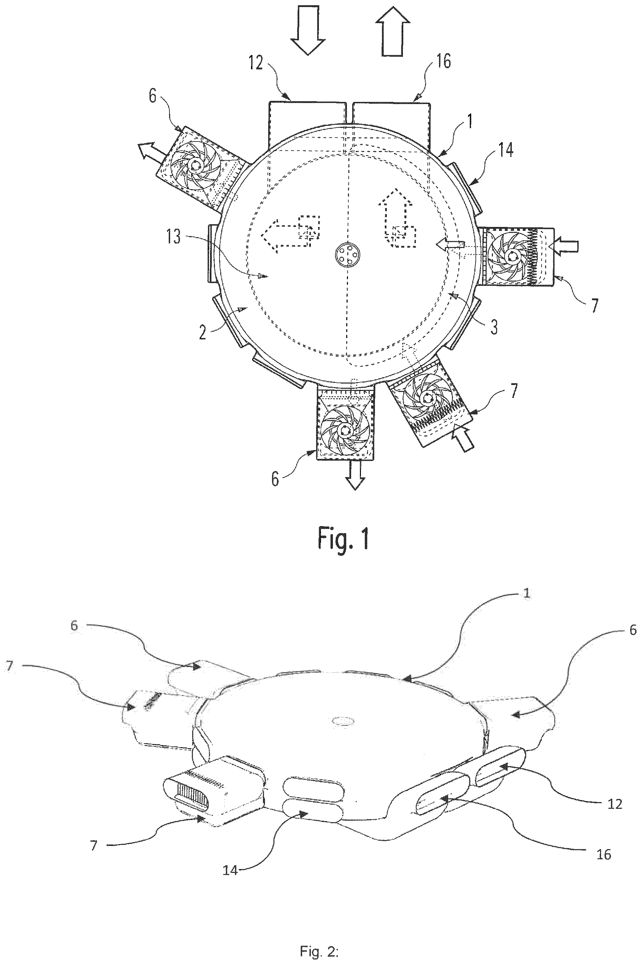

In Figur 1 ist ein Lüftungsgerät 1 zu erkennen. Ein Zuluftverteiler 2 und ein Abluftverteiler 3 sind in ein einziges Element integriert. Am Lüftungsgerät 1 außen angebracht sind mehrere Gehäuse 6 für Lüfter, die als Luftfördereinheit für die Zuluft dienen. Ebenfalls am Lüftungsgerät 1 außen angebracht sind mehrere Gehäuse 7 für Lüfter, die als Luftfördereinheit für die Abluft dienen. Frische Luft wird über einen hier nicht gezeigten Versorgungskanal zu einem Außenlufteintritt 12 geführt. Vom Außenlufteintritt 12 strömt die Luft weiter zum Wärmetauscher 13, in der eine Vorwärmung durch die aus den Gehäusen 7 kommende Abluft erfolgt. An nicht genutzten Anschlüssen sind Deckel 14 angebracht. Figur 2 ist eine perspektivische Ansicht von Figur1.

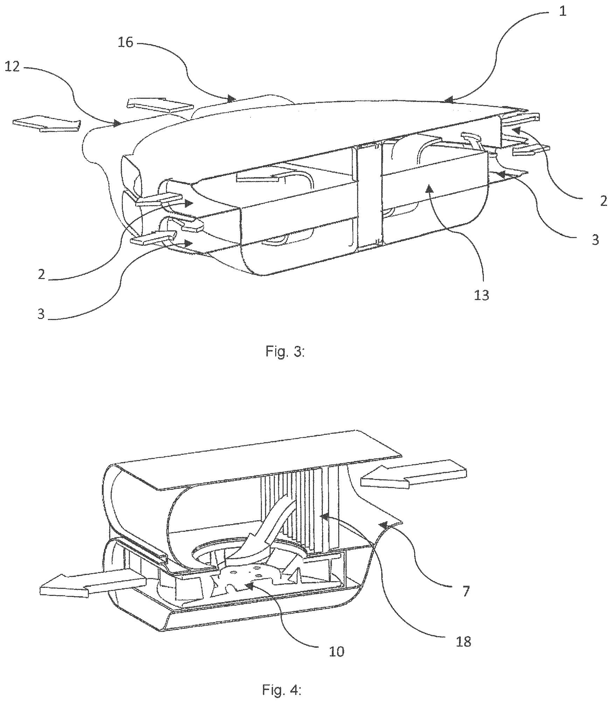

In Figur 3 ist eine weitere Schnittansicht gezeigt, die den als Rotationswärmetauscher ausgebildeten Wärmetauscher 13 deutlicher macht.

In Figur 4 ist ein Abluft-Lüftergehäuse 7 gezeigt. Ein als Luftfördereinheit dienender Lüfter 10 fördert Luft, die durch einen Filter 18 angesaugt und dort gereinigt wird.

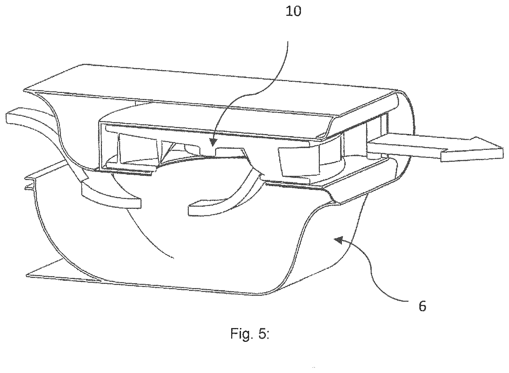

In Fig. 5 wird der Aufbau eines Zuluft-Lüftergehäuses gezeigt. Neben der Förderrichtung ist der wesentliche Unterschied, dass dort kein Filter angebracht ist.

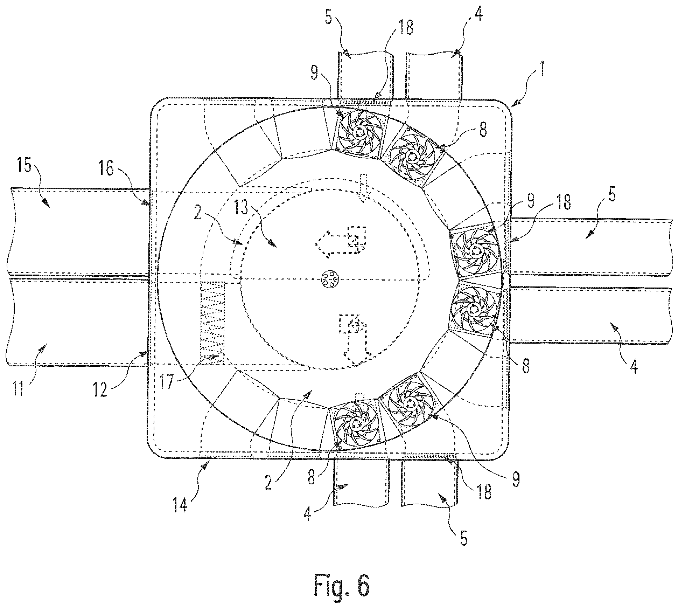

Figur 6 zeigt ein Lüftungsgerät 1, bei dem die dort nicht dargestellten Lüfter und die Lüfter beherbergende Gehäuse 8, 9 im Inneren des Lüftungsgeräts 1 integriert sind. Für die Lüfter, welche Zuluft in Zuluftkanäle 4 fördern, dienen Zuluftgehäuse 8. Hingegen sind in Abluftgehäusen 9 Lüfter untergebracht, welche Abluft durch die Abluftkanäle 5 aus den Räumen saugen.

Zu erkennen ist ferner ein als Versorgungskanal dienender Außenluftkanal 11, durch den Außenluft zum Außenlufteintritt 12 strömt. Durch den Fortluftaustritt 16 hingegen kann Fortluft in einen als Entsorgungskanal dienenden Fortluftkanal 15 strömen.

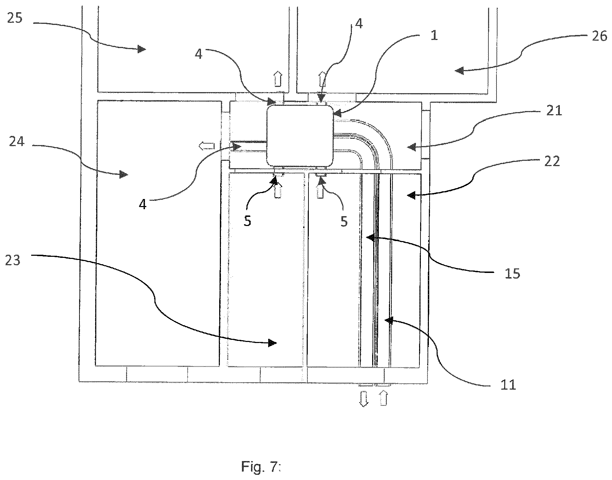

Eine Anwendung des Lüftungsgeräts 1 nach Figur 6 ist in Figur 7 gezeigt. Das Lüftungsgerät 6 ist an der Decke eines Flurs 21 befestigt. Durch die Zuluftkanäle 4 strömt Zuluft in ein Wohnzimmer 24 und in Schlafzimmer 25 und 26. Abluft wird durch die Abluftkanäle 5 aus einer Küche 22 und einem Bad 23 abgesaugt.

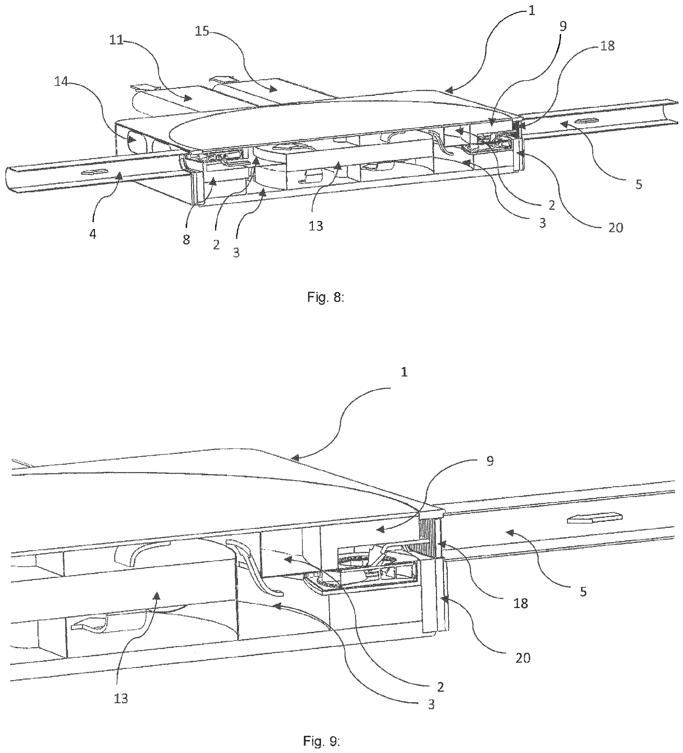

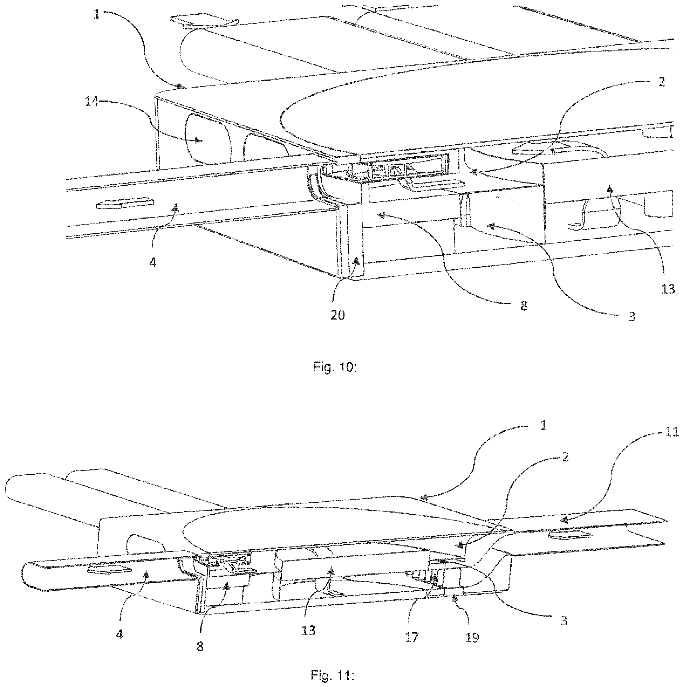

Die Figuren 8 bis 12 zeigen weitere Schnittdarstellungen des Lüftungsgeräts nach Figur 6, also eines Lüftungsgeräts mit innerhalb des Lüftungsgeräts 1 angebrachten Lüftergehäusen 8, 9.

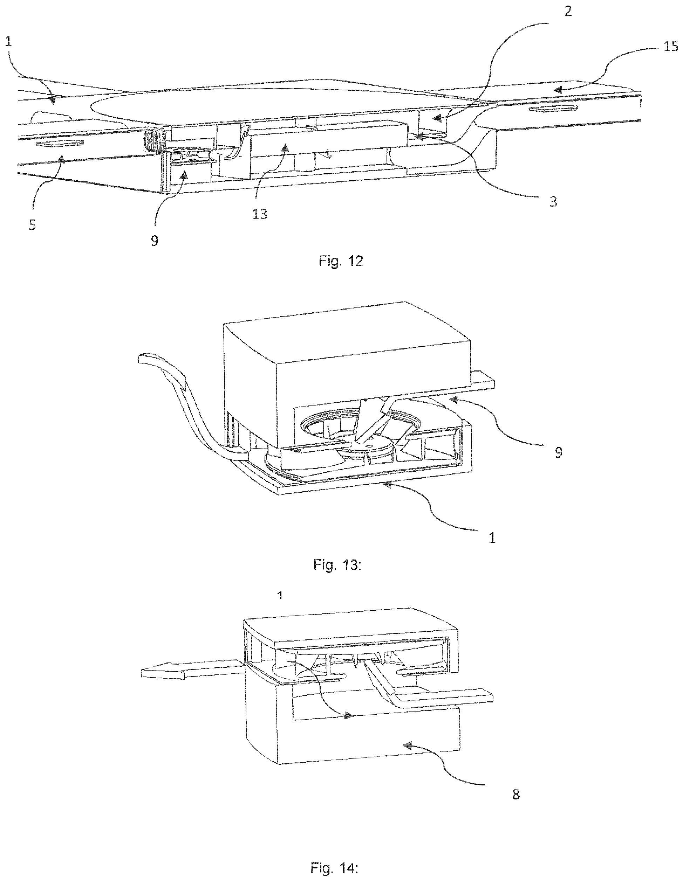

In Figur 13 ist ein Lüftergehäuse gezeigt, welches aufgrund seiner Einbaulage als Abluftgehäuse dient. Durch Drehung kann wie in Figur 14 gezeigt, dasselbe Gehäuse als Zuluftgehäuse dienen.

## Patentansprüche

1. Lüftungsgerät (1) zur Belüftung eines Gebäudes (21, 22, 23, 24, 25, 26), aufweisend einen Zuluftverteiler (2) der durch mindestens einen Versorgungskanal (11) mit Zuluft versorgt werden kann und einen Abluftverteiler (3) aus dem durch mindestens einen Entsorgungskanal (15) Fortluft abgeführt werden kann,
wobei in dem Lüftungsgerät (1) ein Wärmetauscher (13), insbesondere ein Rotationswärmetauscher oder ein Plattenwärmetauscher oder ein Enthalpiewärmetauscher, angeordnet ist, welcher eine Übertragung von Wärme und/oder Feuchte von der Abluft an die Zuluft und/oder umgekehrt ermöglicht,
**dadurch gekennzeichnet, dass** der Zuluftverteiler (2) eine Mehrzahl von einzeln ansteuerbaren Luftfördereinheiten (10) aufweist, welche die Zuluft durch unterschiedliche, der jeweiligen Luftfördereinheit (10) zugeordnete Zuluftkanäle (4) zu einem dem jeweiligen Zuluftkanal (4) zugeordneten Raum (24, 25, 26) fördern können;
und der Abluftverteiler (3) eine Mehrzahl von einzeln ansteuerbaren Luftfördereinheiten (10) aufweist, welche die Abluft durch unterschiedliche, der jeweiligen Luftfördereinheit (10) zugeordnete Abluftkanäle (5) von einem dem jeweiligen Abluftkanal (5) zugeordneten Raum (22, 23) fördern können.

2. Lüftungsgerät nach Anspruch 1, **dadurch gekennzeichnet, dass** für die Luftfördereinheiten (10) Gehäuse (6, 7, 8, 9) vorhanden sind, welche in das Lüftungsgerät (1) eingebaut oder einbaubar sind und/oder an das Lüftungsgerät (1) außen angebaut oder anbaubar, insbesondere ansteckbar, sind.

3. Lüftungsgerät nach einem der vorhergehenden Ansprüche, **dadurch gekennzeichnet, dass** zur Förderung von Zuluft und zur Förderung von Abluft identische Luftfördereinheiten (10) vorhanden sind, die so ausgebildet sind, dass sie je nach Einbaulage zur Förderung von Zuluft oder zur Förderung von Abluft dienen können.

4. Lüftungsgerät nach einem der vorhergehenden Ansprüche, **dadurch gekennzeichnet, dass** die Luftfördereinheit (10) für die Zuluft in einen Raum und die Luftfördereinheit zur Abluft aus einem Raum so abgestimmt sind, dass die geförderten Luftmengenströme bei Normaldruck im zu belüftenden Raum weitgehend übereinstimmen.

5. Lüftungsgerät nach Anspruch 4, **dadurch gekennzeichnet, dass** die beiden Luftfördereinheiten (10) einen gemeinsamen mechanischen Antrieb aufweisen.

6. Lüftungsgerät nach einem der vorhergehenden Ansprüche, **dadurch gekennzeichnet, dass** die Zuluftkanäle (4) und/oder die Abluftkanäle (5) mit Hilfe eines Stecksystems oder eines Systems nach Art eines Stecksystems an das Lüftungsgerät (1) angesteckt werden können.

7. Lüftungsgerät nach einem der vorhergehenden Ansprüche, **dadurch gekennzeichnet, dass** das Lüftungsgerät Sensoren zur Ansteuerung der Luftfördereinrichtungen (10) aufweist, wobei die Sensoren zur Ansteuerung der Luftfördereinrichtungen (10) für die Abluft insbesondere im Gehäuse (7, 9) der Luftfördereinrichtung (10) für die Abluft angeordnet sind und/oder die Sensoren zur Ansteuerung der Luftfördereinrichtungen (10) für die Zuluft insbesondere im zu belüftenden Raum (24, 25, 26) angeordnet sind.

8. Lüftungsgerät nach Anspruch 7, **dadurch gekennzeichnet, dass** die Sensoren zur Ansteuerung der Luftfördereinrichtungen (10) für die Zuluft mit einer Funkverbindung und/oder mit in den Zuluftkanälen (4) verlaufenden Kabeln mit den Luftfördereinrichtungen (10) für die Zuluft verbunden sind.

9. Lüftungsgerät nach einem der vorhergehenden Ansprüche, **dadurch gekennzeichnet, dass** Filter (18) zur Reinigung der geförderten Luft vorhanden sind.

## Claims

1. Ventilation appliance (1) for ventilating a building (21, 22, 23, 24, 25, 26), having an incoming-air distributor (2) which can be supplied with incoming air through at least one supply duct (11) and an exhaust-air distributor (3) from which outgoing air can be removed through at least one discharge duct (15),
wherein a heat exchanger (13), in particular a rotary heat exchanger or a plate heat exchanger or an enthalpy heat exchanger, is arranged in the ventilation appliance (1) and allows a transfer of heat and/or moisture from the exhaust air to the incoming air and/or vice versa,
**characterized in that** the incoming-air distributor (2) has a plurality of individually controllable air-conveying units (10) which can convey the incoming air through various incoming-air ducts (4) assigned to the respective air-conveying unit (10) to a room (24, 25, 26) associated with the respective incoming-air duct (4) ;
and the exhaust-air distributor (3) has a plurality of individually controllable air-conveying units (10) which can convey the exhaust air through various exhaust-air ducts (5) assigned to the respective air-conveying unit (10) from a room (22, 23) associated with the respective exhaust-air duct (5).

2. Ventilation appliance according to Claim 1, **characterized in that** housings (6, 7, 8, 9) are present for the air-conveying units (10), which housings are or can be built into the ventilation appliance (1) and/or are or can be built, in particular can be plugged, onto the ventilation appliance (1) on the outside.

3. Ventilation appliance according to one of the preceding claims, **characterized in that** identical air-conveying units (10) are present for conveying incoming air and for conveying exhaust air and are designed such that, depending on the installed position, they can serve for conveying incoming air or for conveying exhaust air.

4. Ventilation appliance according to one of the preceding claims, **characterized in that** the air-conveying unit (10) for the incoming air entering a room and the air-conveying unit for the exhaust air leaving a room are tailored such that the conveyed air-quantity flows substantially correspond under normal pressure in the room to be ventilated.

5. Ventilation appliance according to Claim 4, **characterized in that** the two air-conveying units (10) have a common mechanical drive.

6. Ventilation appliance according to one of the preceding claims, **characterized in that** the incoming-air ducts (4) and/or the exhaust-air ducts (5) can be plugged onto the ventilation appliance (1) by means of a plug system or a system in the manner of a plug system.

7. Ventilation appliance according to one of the preceding claims, **characterized in that** the ventilation appliance has sensors for controlling the air-conveying devices (10), wherein the sensors for controlling the air-conveying devices (10) for the exhaust air are arranged in particular in the housing (7, 9) of the air-conveying device (10) for the exhaust air and/or the sensors for controlling the air-conveying devices (10) for the incoming air are arranged in particular in the room (24, 25, 26) to be ventilated.

8. Ventilation appliance according to Claim 7, **characterized in that** the sensors for controlling the air-conveying devices (10) for the incoming air are connected to the air-conveying devices (10) for the incoming air by a radio link and/or by cables extending in the incoming-air ducts (4).

9. Ventilation appliance according to one of the preceding claims, **characterized in that** filters (18) for cleaning the conveyed air are present.

## Revendications

1. Appareil de ventilation (1) pour la ventilation d'un bâtiment (21, 22, 23, 24, 25, 26), présentant un distributeur d'air neuf(2) qui peut être alimenté en air neuf par au moins un canal d'alimentation (11) et un distributeur d'air extrait (3) à partir duquel l'air extrait peut être évacué par au moins un canal d'évacuation (15),
dans lequel un échangeur de chaleur (13) est disposé, en particulier un échangeur de chaleur rotatif ou un échangeur de chaleur à plaques ou un échangeur de chaleur enthalpique, qui permet un transfert de chaleur et/ou d'humidité de l'air extrait à l'air neuf et/ou inversement,
**caractérisé en ce que** le distributeur d'air neuf (2) présente une multiplicité d'unités de refoulement d'air individuellement réglables (10), qui peuvent refouler l'air neuf à travers différents canaux d'air neuf (4), respectivement associés à chaque unité de refoulement d'air (10) jusqu'à un espace (24, 25, 26) associé au canal d'air neuf respectif (4);
et le distributeur d'air extrait (3) présente une multiplicité d'unités de refoulement d'air individuellement réglables (10), qui peuvent refouler l'air extrait à travers différents canaux d'air extrait (5) associés à l'unité de refoulement d'air respective (10) depuis un espace (22, 23) associé au canal d'air extrait respectif (5).

2. Appareil de ventilation selon la revendication 1, **caractérisé en ce qu'**il se trouve pour les unités de refoulement d'air (10) des boîtiers (6, 7, 8, 9), qui sont ou peuvent être montés dans l'appareil de ventilation (1) et/ou qui sont ou peuvent être montés extérieurement, en particulier raccordables sur l'appareil de ventilation (1).

3. Appareil de ventilation selon l'une quelconque des revendications précédentes, **caractérisé en ce qu'**il se trouve pour le refoulement d'air neuf et pour le refoulement d'air extrait des unités de refoulement d'air identiques (10), réalisées de telle manière que, selon leur position de montage, elles puissent servir au refoulement d'air neuf ou au refoulement d'air extrait.

4. Appareil de ventilation selon l'une quelconque des revendications précédentes, **caractérisé en ce que** l'unité de refoulement d'air (10) pour l'air neuf dans un espace et l'unité de refoulement d'air pour l'air extrait hors d'un espace sont accordées de telle manière que les flux d'air refoulés soient sensiblement identiques pour une pression normale dans l'espace à ventiler.

5. Appareil de ventilation selon la revendication 4, **caractérisé en ce que** les deux unités de refoulement d'air (10) présentent un entraînement mécanique commun.

6. Appareil de ventilation selon l'une quelconque des revendications précédentes, **caractérisé en ce que** les canaux d'air neuf (4) et/ou les canaux d'air extrait (5) peuvent être raccordés sur l'appareil de ventilation (1) au moyen d'un système de raccord ou d'un système du type de système de raccord.

7. Appareil de ventilation selon l'une quelconque des revendications précédentes, **caractérisé en ce que** l'appareil de ventilation présente des capteurs pour la commande des dispositifs de refoulement d'air (10), dans lequel les capteurs pour la commande des dispositifs de refoulement d'air (10) pour l'air extrait sont disposés en particulier dans le boîtier (7, 9) du dispositif de refoulement d'air (10) pour l'air extrait et/ou les capteurs pour la commande des dispositifs de refoulement d'air (10) pour l'air neuf sont disposés en particulier dans l'espace à ventiler (24, 25, 26) .

8. Appareil de ventilation selon la revendication 7, **caractérisé en ce que** les capteurs destinés à commander les dispositifs de refoulement d'air (10) pour l'air neuf sont raccordés aux dispositifs de refoulement d'air (10) pour l'air neuf par une liaison radio et/ou par des câbles posés dans les canaux d'air neuf (4).

9. Appareil de ventilation selon l'une quelconque des revendications précédentes, **caractérisé en ce qu'**il se trouve des filtres (18) pour l'épuration de l'air refoulé.
